# EUROPEAN PATENT APPLICATION

(11) **EP 3 951 564 A1**
(43) Date of publication of application: **09.02.2022**
(21) Application number: 21198618.7
(22) Date of filing: 30.11.2018
(51) Int. Cl.: G06F 3/01, G06F 1/16, G06F 3/0346, G06N 99/00, G06F 3/0484, G06K 9/00, G06N 3/04, G06N 3/08, G06N 7/00

(54) **METHODS AND APPARATUS FOR SIMULTANEOUS DETECTION OF DISCRETE AND CONTINUOUS GESTURES**

(30) Priority: 30.11.2017 US 201762592656 P; 25.01.2018 US 201862621728 P
(62) Divisional of application: 18883547.4
(71) Applicant: Facebook Technologies, LLC, Menlo Park, CA 94025 (US)
(72) Inventor: Kaifosh, Patrick, New York (US); Demers, Steven, New York (US); Berenzweig, Adam, New York (US); Astolfi, Michael, New York (US); Awad, Lana, New York (US); Giurgica-Tiron, Tudor, New York (US); Al-Natsheh, Adam, New York (US)
(74) Representative: Murgitroyd & Company

(57) **Abstract**

According to at least one aspect, a computerized system is provided. The computerized system comprises a plurality of neuromuscular sensors configured to record a plurality of neuromuscular signals from a user, wherein the plurality of neuromuscular sensors are arranged on one or more wearable devices and at least one computer processor or computing device. The at least one computer processor may be programmed to determine, using one or more trained statistical models and the plurality of neuromuscular signals, position information and force information representing at least one movement performed by the user; and identify gestures performed by the user based, at least in part, on the position information and/or the force information.

## Description

### BACKGROUND

Techniques exist to control a computer system via a myoelectric user interface. In one such approach, a user wears a band that is sized to fit around the user's forearm or wrist. The band includes myoelectric sensors arranged to detect hand and/or finger gestures by sensing the user's muscle activity. Typically, the wearable band includes processing capabilities to receive the sensed signals and to convert them into electronic control signals, which are then delivered (wirelessly or otherwise) to a device being controlled, such as a computer, some other portable electronic device, an application executing on such a device, or the like.

In some computer applications that generate musculoskeletal representations of the human body, it is desirable for the application to know the spatial positioning, orientation and movement of a user's body to provide a realistic representation of body movement. For example, in a virtual reality (VR) environment, tracking the spatial position of the user's hand enables the application to represent hand motion in the VR environment, which allows the user to interact with (e.g., by grasping or manipulating) virtual objects within the VR environment. Some existing techniques for tracking movements of a user's body using wearable sensors include using information obtained from multiple Inertial Measurement Units (IMUs) affixed to different parts of the user's body, and using external imaging devices (e.g., fixed-position cameras) to reconstruct the position and orientation of parts of the user's body.

### SUMMARY

According to at least one aspect, a system is provided. The system comprises a wearable device comprising a plurality of sensors including a neuromuscular sensor and being configured to generate at least one output signal indicative of a movement performed by a user on which the wearable device is worn, the at least one output signal comprising a neuromuscular signal generated by the neuromuscular sensor; and at least one computing device communicatively coupled to the plurality of sensors and configured to: receive the at least one output signal from the plurality of sensors; identify, using one or more models, a first gesture performed by the user based on the at least one output signal; and identify, using the one or more models, a second gesture performed by the user simultaneously with the first gesture based on the at least one output signal.

In some embodiments, the first gesture is a discrete gesture and the second gesture is a continuous gesture. In some embodiments, the plurality of sensors comprises an inertial measurement unit (IMU) sensor and the at least one output signal comprises an IMU signal generated by the IMU sensor. In some embodiments, the at least one computing device is configured to identify the first gesture performed by the user based, at least in part, on the neuromuscular signal and identify the second gesture performed by the user simultaneously with the first gesture based, at least in part, on the IMU signal. In some embodiments, the first gesture is a discrete gesture and the second gesture is a continuous gesture.

In some embodiments, the at least one computing device is configured to identify the first gesture performed by the user based, at least in part, on the neuromuscular signal and identify the second gesture performed by the user simultaneously with the first gesture based, at least in part, on the neuromuscular signal. In some embodiments, the at least one computing device is configured to identify the first gesture using a first model of the one or more models and identify the second gesture performed simultaneously with the first gesture using a second model of the one or more models that is different from the first model. In some embodiments, the at least one computing device is configured to train the first model to recognize the first gesture at least in part by: generating a first training data set comprising a first segment of the at least one output signal during which the first gesture and the second gesture are simultaneously performed by the user; and training the first model using the first training data set. In some embodiments, the at least one computing device is configured to train the second model to recognize the second gesture at least in part by: generating a second training data set comprising a second segment of the at least one output signal during which the first gesture and the second gesture are simultaneously performed by the user; and training the second model using the training data set. In some embodiments, the first training data set is the same as the second training data set.

In some embodiments, the neuromuscular sensor comprises a sensor selected from the group consisting of: an electromyography (EMG) sensor, a mechanomyography (MMG) sensor, and a sonomyography (SMG) sensor. In some embodiments, the wearable device comprises a flexible or elastic band configured to be worn around the body part of the user. In some embodiments, the flexible or elastic band comprises an armband configured to be worn around an arm of the user.

In some embodiments, at least one of the one or more models is a trained statistic model. In some embodiments, the trained statistical model is implemented as a neural network (e.g., a recurrent neural network), a non-linear regression model, or a Markov model.

In some embodiments, the at least one computing device is integrated with the wearable device.

According to at least one aspect, a system having a plurality of operating modes including a first operating mode and a second operating mode is provided. The system comprises a wearable device comprising a plurality of sensors including an electromyography (EMG) sensor and being configured to generate at least one output signal indicative of a movement performed by a user on which the wearable device is worn, the at least one output signal comprising an EMG signal generated by the EMG sensor; and at least one computing device communicatively coupled to the plurality of sensors and configured to: receive the at least one output signal from the plurality of sensors; identify, using one or more models, a first gesture performed by the user while the system is in the first operating mode based on the at least one output signal; responsive to identifying the first gesture, change a current operating mode of the system from the first operating mode to the second operating mode; and identify, using the one or more models, a second gesture performed by the user while the system is in the second operating mode based on the at least one output signal.

In some embodiments, the first gesture is a discrete gesture and the second gesture is a continuous gesture. In some embodiments, the plurality of sensors comprises an inertial measurement unit (IMU) sensor and the at least one output signal comprises an IMU signal generated by the IMU sensor. In some embodiments, the at least one computing device is configured to identify the first gesture performed by the user based, at least in part, on the EMG signal and identify the second gesture based, at least in part, on the IMU signal. In some embodiments, the first gesture is a discrete gesture and the second gesture is a continuous gesture.

In some embodiments, the at least one computing device is configured to identify the first gesture performed by the user based, at least in part, on the EMG signal and identify the second gesture performed by the user simultaneously with the first gesture based, at least in part, on the EMG signal. In some embodiments, the at least one computing device is configured to identify the first gesture performed by the user based, at least in part, on the EMG signal and identify the second gesture performed by the user based, at least in part, on the EMG signal. In some embodiments, the at least one computing device is configured to identify the first gesture using a first model of the one or more models and identify the second gesture using a second model of the one or more models that is different from the first model.

In some embodiments, the wearable device comprises a flexible or elastic band configured to be worn around the body part of the user. In some embodiments, the flexible or elastic band comprises an armband configured to be worn around an arm of the user.

In some embodiments, at least one of the one or more models is a trained statistic model. In some embodiments, the trained statistical model is implemented as a neural network (e.g., a recurrent neural network), a non-linear regression model, or a Markov model.

In some embodiments, the at least one computing device is integrated with the wearable device.

In some embodiments, the at least one computing device is configured to execute at least one software application in response to the current operating mode of the system changing from the first operating mode to the second operating mode.

According to at least one aspect, a computerized system is provided. The computerized system comprises a plurality of neuromuscular sensors configured to continuously record a plurality of neuromuscular signals from a user, wherein the plurality of neuromuscular sensors are arranged on one or more wearable devices; and at least one computer processor programmed to: determine, using one or more trained statistical models and the plurality of neuromuscular signals, position information and force information representing at least one movement performed by the user; and identify a discrete gesture event performed by the user based, at least in part, on the position information and/or the force information.

In some embodiments, the at least one computer processor is further programmed to generate a musculoskeletal representation of a hand of the user based, at least in part, on the position information and/or force information, and wherein the determined position information comprises a set of joint angles, wherein each of the joint angles in the set describes a spatial relationship between two or more connected segments of the musculoskeletal representation of the hand of the user.

In some embodiments, the system further comprises at least one storage device configured to store gesture models for each of a plurality of discrete gesture events, wherein identifying a discrete gesture event performed by the user comprises identifying the discrete gesture event based, at least in part, on one or more of the stored gesture models.

In some embodiments, a first gesture model of the stored gesture models comprises one or more values for a subset of joint angles for particular connected segments of the musculoskeletal model, and wherein identifying the discrete gesture event comprises determining that the user has performed the discrete gesture event for the first gesture model based on a comparison of at least some of the position information and the one or more values specified in the first gesture model.

In some embodiments, the one or more values comprise a range of values for each of the joint angles in the subset, and wherein determining that the user has performed the discrete gesture event for the first gesture model comprises determining that the position information includes values for joint angles of the particular connected segments that fall within the range of values specified in the first gesture model.

In some embodiments, the determined force information describes a force exerted by at least one segment of the musculoskeletal representation of the hand, wherein a first gesture model of the stored gesture model specifies one or more values for a force exerted by a subset of one or more segments of the musculoskeletal model, and wherein identifying the discrete gesture event comprises determining that the user has performed the discrete gesture event for the first gesture model based on a comparison of at least some of the force information and the one or more values specified in the first gesture model.

In some embodiments, the one or more values comprise a range of forces for each of the at least one segment in the subset, and wherein determining that the user has performed the discrete gesture event for the first gesture model comprises determining that the force information includes a value for the force exerted by the at least one segment in the subset that falls within the range of values specified in the first gesture model.

In some embodiments, the one or more values comprise a first threshold value for a first segment in the subset, and wherein determining that the user has performed the discrete gesture event for the first gesture model comprises determining that the force information includes a value for the first segment that exceeds the first threshold value.

In some embodiments, the one or more values comprise a second threshold value for the first segment in the subset, and wherein the at least one computer processor is further programmed to determine that the user has completed performance of the discrete gesture when the force information includes a value for the first segment that is lower than the second threshold value.

In some embodiments, the determined force information describes a force exerted by at least one segment of the musculoskeletal representation of the hand, wherein the first gesture model of the stored gesture models specifies one or more values for a force exerted by a subset of one or more segments of the musculoskeletal model, and wherein identifying the discrete gesture event further comprises determining that the user has performed the discrete gesture event for the first gesture model based on a comparison of at least some of the force information and the one or more values for a force specified in the first gesture model.

In some embodiments, the at least one computer processor is further programmed to: determine that the user is performing a new discrete gesture that does not have a corresponding stored gesture model; and add to the stored gesture models, a new gesture model based, at least in part, on the determined position information and/or the determined force information.

In some embodiments, the identified discrete gesture event is a first gesture event, and wherein the at least one computer processor is further programmed to identify, using the one or more trained statistical models, a second gesture event performed by the user.

In some embodiments, the second gesture event is a continuous gesture event performed simultaneously with the first gesture event.

In some embodiments, the second gesture event is performed by the user subsequent to the user performing the first gesture event.

In some embodiments, the second gesture event is a continuous gesture event.

In some embodiments, the second gesture event is a second discrete gesture event.

In some embodiments, the first gesture event is identified based on the position information and the second gesture event is determined based on the force information.

In some embodiments, the first gesture event is identified based on the force information and the second gesture event is determined based on the position information.

In some embodiments, the system further comprises at least one auxiliary sensor configured to continuously record a plurality of auxiliary signals, wherein identifying the second gesture event comprises identifying the second gesture event based, at least in part, on the plurality of auxiliary signals.

In some embodiments, the at least one auxiliary sensor comprises at least one inertial measurement unit.

According to at least one aspect, a gesture recognition system is provided. The gesture recognition system comprises a plurality of neuromuscular sensors configured to record a time series of neuromuscular signals from a user, wherein the plurality of neuromuscular sensors are arranged on one or more wearable devices; and at least one computer processor programmed to: provide, via a user interface, a series of prompts for the user to perform a plurality of hand-based gestures; determine, based on the series of prompts and the series of neuromuscular signals recorded during the performance of the plurality of hand-gestures by the user, neuromuscular signals that correspond to performance of each of the plurality of hand-based gestures; and generate at least one discrete gesture model based, at least in part, on the determined neuromuscular signals that correspond to performance of each of the plurality of hand-based gestures.

In some embodiments, the at least one computer processor is programmed to determine, based on the series of prompts and the series of neuromuscular signals recorded during the performance of the plurality of hand-gestures by the user, neuromuscular signals that correspond to performance of each of the plurality of hand-based gestures using unsupervised time segmentation and alignment techniques.

According to at least one aspect, a gesture recognition system is provided. The gesture recognition system comprises a plurality of neuromuscular sensors configured to record a time series of neuromuscular signals from a user, wherein the plurality of neuromuscular sensors are arranged on one or more wearable devices; and at least one computer processor programmed to: receive, via a user interface, an indication from the user that the user is performing a particular hand-based gesture; determine, based on the time series of neuromuscular signals recorded following, immediately preceding, or during the received indication, neuromuscular signals that correspond to performance the particular hand-based gesture; and generate at least one discrete gesture model based, at least in part, on the determined neuromuscular signals that correspond to performance of the particular hand-based gesture.

### BRIEF DESCRIPTION OF THE DRAWINGS

Various non-limiting embodiments of the technology will be described with reference to the following figures. It should be appreciated that the figures are not necessarily drawn to scale.
FIG. 1 is a diagram of an example myoelectric signal processor in accordance with some embodiments of the technology described herein;
FIG. 2 is a diagram of an example system comprising the myoelectric signal processor of FIG. 1;
FIG. 3 is a diagram of an example computing device in accordance with some embodiments of the technology described herein;
FIG. 4 shows an example wristband having EMG sensors arranged circumferentially thereon that may be used with some embodiments of the technology described herein;
FIG. 5 shows a user wearing the example wristband of FIG. 4 while typing on a keyboard.
FIG. 6 is a schematic diagram of a computer-based system for generating a musculoskeletal representation based on neuromuscular sensor data in accordance with some embodiments of the technology described herein;
FIG. 7 is a flowchart of an illustrative process for generating a statistical model for predicting musculoskeletal position information using signals recorded from sensors, in accordance with some embodiments of the technology described herein;
FIG. 8 is a flow diagram for an example method of recognizing gestures in neuromuscular signals in accordance with some embodiments of the technology described herein;
FIG. 9A is a flow diagram for an example method of generating new gesture models in accordance with some embodiments of the technology described herein; and
FIG. 9B is a flow diagram for another example method of generating new gesture models in accordance with some embodiments of the technology described herein.

### DETAILED DESCRIPTION

As mentioned above, a myoelectric user interface may be constructed that generates control signals based on detected muscle activity of a user. These control signals may be employed to control any of a variety of devices, such as desktop computers, laptops, gaming systems, and/or prosthetic devices. The myoelectric user interface may generate the control signals using, for example, a model that maps detected muscle activity to particular control signals.

The inventors have appreciated that some conventional myoelectric user interfaces are only capable of detecting one gesture performed by a user at a time. For example, some conventional myoelectric interfaces may be incapable of detecting a clenched fist gesture that is performed simultaneously with a wrist twist gesture. The limitation of the simultaneous number of gestures that may be detected by some conventional myoelectric interfaces may originate from, for example, the approach employed to train models that map detected muscle activity to control signals associated with specific gestures. Conventional models are typically trained to recognize a particular gesture in the detected muscle activity using a training data set that consists of detected muscle activity when the user only performs the particular gesture. As a result, a conventional model may be unable to detect the particular gesture when the detected muscle activity comprises a combination of muscle activity associated with the particular gesture and muscle activity associated with another, different gesture.

Accordingly, the inventors have conceived and developed new techniques for accurately detecting combinations of gestures (e.g., two or more gestures performed simultaneously and/or two or more gestures performed in direct succession). In some embodiments, the model that maps detected muscle activity to a particular gesture may be trained using a training data set that comprises detected muscle activity when the user performs the particular gesture in addition detected muscle activity when the user performs the particular gesture in combination with one or more other gestures. As a result, the model may be more adept at detecting the particular gesture in instances where multiple gestures are being performed at least partially overlapping in time. A plurality of models each configured to detect a particular gesture may be trained in this fashion to create a myoelectric interface that is capable of detecting any combination of gestures being performed (e.g., 2 gestures, 3 gestures, 4 gestures, etc.). Thereby, a complex movement may be seamlessly processed by decomposing the complex movement into a plurality of constituent gestures using a plurality of models (e.g., a model for each constituent gesture).

The techniques herein may be employed to, for example, create a myoelectric user interface that is capable of detecting a discrete gesture performed simultaneously and/or in direct succession with a continuous gesture. A discrete gesture may be, for example, a gesture that maps to a control signal with a finite number of states (e.g., two states, three states, four states, or five states). For example, a gesture that maps to a button press control signal that has two states (e.g., button not depressed / button depressed) may be a discrete gesture. A continuous gesture may be, for example, a gesture that maps to a control signal that is variable between at least two boundaries. For example, a gesture that maps to a lever position control signal that varies between an upper boundary (e.g., lever at highest position) and a lower boundary (e.g., level at lowest position) may be a continuous gesture.

The myoelectric user interface may be configured to detect both discrete and continuous gestures in any of a variety of ways. In some embodiments, the myoelectric user interface may employ a first model configured to detect a discrete gesture and a second model configured to detect a continuous gesture. In these embodiments, the first model may be different from the second model. For example, the first model may be a Markov model (e.g., a Hidden Markov model) and the second model may be a neural network (e.g., a recurrent neural network) or a non-linear regression model. The first and second models may be trained together such that each model is capable of identifying their respective gestures in muscle activity data associated with a user performing the respective gesture and another, different gesture. For example, both the first and second models may be trained using muscle activity data associated with a user performing the discrete gesture alone, the user performing the continuous gesture alone, and the user performing the discrete gesture and the continuous gesture simultaneously.

Employing a myoelectric user interface that is capable of detecting both discrete and continuous gestures may enable the application of more complex control schemes. In some embodiments, a hierarchical control scheme may be employed where the mapping of a gesture to a particular control signal varies based on the performance of another gesture. For example, a discrete gesture may control a mode of operation of the myoelectric user interface and the particular control signal generated in response to detecting a continuous gesture may vary based on a current mode of operation. In one implementation for illustration, a myoelectric user interface may identify a discrete gesture where the user is holding a virtual volume knob and change to a volume control mode of operation responsive to identifying the discrete gesture. In this implementation, the myoelectric user interface may subsequently identify a continuous gesture where the user is turning up the virtual volume knob and generate a control signal to increase volume responsive to identifying the continuous gesture while in the volume control mode.

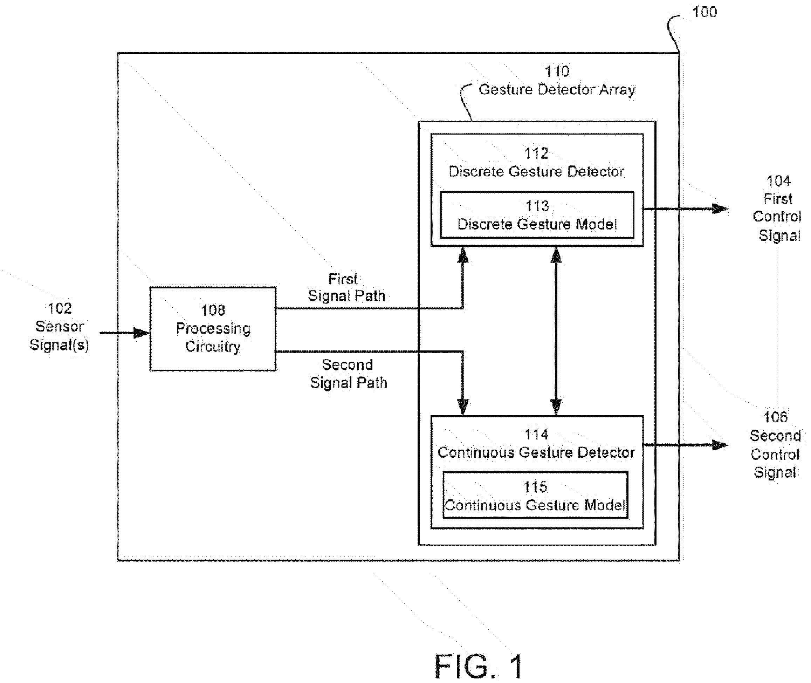

FIG. 1 shows an example myoelectric signal processor 100 that is configured to receive sensor signal(s) 102 and generate control signal(s) (shown as first control signal 104 and second control signal 106) based on the received sensor signal(s) 102. As shown, the myoelectric signal processor 100 comprises processing circuitry 108 that may receive and process the sensor signal(s) 102 to generate output signals for a gesture detector array 110. The gesture detector array 110 may analyze the output signals from the processing circuitry 108 to identify gestures performed by a user and generate control signals 104 and 106 based on the detected gestures. The gesture detector array 110 may comprise a discrete gesture detector 112 that uses a discrete gesture model 113 to detect a discrete gesture in the output of the processing circuitry 108 and a continuous gesture detector 114 that uses a continuous gesture model 115 to detect a continuous gesture in the output of the processing circuitry 108. It should be appreciated that the myoelectric signal processor 100 may be implemented in any of a variety of ways using electronic hardware, computer programs, or a combination thereof. For example, the myoelectric signal processor 100 may be implemented using a computing device that executes one or more computer programs configured to perform one or more functions described with reference to the myoelectric signal processor 100 or any component thereof.

The sensor signal(s) 102 may be, for example, generated by one or more sensors that detect a movement of a user. Example sensors that may be employed to detect movement of the user include: neuromuscular sensors (e.g., electromyography (EMG) sensors, mechanomyography (MMG) sensors, and sonomyography (SMG) sensors) and inertial measurement units (IMU). These sensors may be, for example, integrated into a wearable device that may be worn by the user and is communicatively coupled to the myoelectric signal processor 100.

The processing circuitry 108 may be configured to receive and process the received sensor signal(s) 102 to generate output signals for the gesture detector array 110. Thereby, the processing circuitry 108 may, in some implementations, be a front-end circuit (e.g., an analog front-end circuit) that functions as the interface between the sensors that generate the sensor signal(s) 102 and the gesture detector array 110. The processing circuitry 108 may comprise any of a variety of components such as amplifiers, filters, analog-to-digital converters (ADCs), digital-to-analog converters (DACs), and/or switches.

The processing circuitry 108 may also be configured to provide a first output signal to the discrete gesture detector 112 along a first signal path and provide a second output signal to the continuous gesture detector 114 along a second signal path. In some embodiments, the first output signal may be different from the second output signal. For example, the sensor signal(s) 102 may comprise a plurality of signals from a plurality of sensors and the processing circuitry 108 may generate the first output signal using a first subset of the plurality of signals and generate the second output signal using a second subset of the plurality of signals that is different from the first subset. In one implementation for illustration, the sensor signal(s) 102 may comprise a neuromuscular signal from a neuromuscular sensor and an IMU signal from an IMU In this implementation, the processing circuitry 108 may generate the first output signal using the neuromuscular signal and generate the second output signal using the IMU signal. It should be appreciated that the first output signal may be the same as the second output signal in other embodiments.

The gesture detector array 110 may be configured to receive one or more output signals from the processing circuitry 108 and analyze the one or more output signals to identify gestures performed by the user. Once a gesture has been identified, a control signal (e.g., control signals 104 and 106) may be generated based on the identified gesture and output (e.g., output to a device being controlled by the myoelectric signal processor 100). The gesture detector array 110 may employ a plurality of gesture detectors (shown as discrete and continuous gesture detectors 112 and 114, respectively) to detect combinations of gestures performed simultaneously (or in direct succession).

In some embodiments, the discrete and continuous gesture detectors 112 and 114, respectively, may employ discrete and continuous gesture models 113 and 115, respectively, to detect gestures in the output of the processing circuitry 108. These gesture models may be, for example, statistical models such as neural networks (e.g., recurrent neural networks), non-linear regression models, or Markov models (e.g., Hidden Markov models). The particular model employed to detect the gesture may depend on, for example, one or more characteristics of the gesture to be detected. For example, the discrete gesture model 113 may be implemented as a Hidden Markov model to detect a discrete gesture and the continuous gesture model 115 may be implemented as a neural network or a non-linear regression model to detect a continuous gesture.

The gesture models 113 and/or 115 may be trained to detect one or more specific gestures in the output of the processing circuitry 108 using one or more training data sets. These training data sets may be constructed such that the discrete gesture model 113 may be capable of detecting a discrete gesture performed simultaneously with another gesture (e.g., a continuous gesture) and the continuous gesture model 115 is capable of detecting the continuous gesture performed simultaneously with another gesture (e.g., the discrete gesture). For example, the training data set for the gesture models 113 and/or 115 may comprise: a first signal output by the processing circuitry 108 when the user performed a discrete gesture; a second signal output by the processing circuitry 108 when the user performed a continuous gesture; and a third signal output by the processing circuitry 108 when the user performed the discrete and continuous gestures simultaneously.

It should be appreciated that one or both of the gesture models 113 and 115 may be non-trained models where one or more parameter values are learned over time. For example, adaptive control techniques may be employed to adapt one or both of the gesture models 113 and 115 over time. Thereby, one or both of the gesture models 113 and 115 may not be trained using a training data set.

The discrete gesture detector 112 may, in some embodiments, control one or more aspects of the operation of the continuous gesture detector 114. For example, the myoelectric signal processor 100 may employ a hierarchical control scheme where the mapping of a gesture to a particular control signal varies based on the performance of another gesture. In this example, the discrete gesture detector 112 may trigger the continuous gesture detector 114 to turn on (and/or wake-up from a sleep state) in response to detecting a discrete gesture such that the continuous gesture detector 114 can detect performance of a continuous gesture. In one implementation for illustration, the discrete gesture detector may detect a discrete gesture where the user is holding a virtual volume knob. In this implementation, the discrete gesture detector 112 may turn on (and/or wake-up from a sleep state) the continuous gesture detector 114 in anticipation of the user performing a continuous gesture where the user turns the virtual volume knob to increase or decrease the volume. After the continuous gesture detector 114 is turned on (and/or woken up), the continuous gesture detector 114 may detect the continuous gesture of turning down the volume knob and generate the appropriate control signal to turn down the volume. Then, the discrete gesture detector 112 may identify that the discrete gesture has ended (e.g., the user's hand is now relaxed) the discrete gesture detector 112 may turn off (and/or put to a sleep state) the continuous gesture detector 114.

Additionally (or alternatively), the operational characteristics of the myoelectric signal processor 100 may be changed in response to a particular gesture (e.g., a discrete gesture or a continuous gesture) being detected. In some embodiments, the myoelectric signal processor 100 may have a plurality of modes of operation and switch between modes in response to particular gestures being detected. For example, each of the plurality of modes of operation may have an associated gesture that, when detected, triggers the myoelectric signal processor 100 to transition to the respective mode of the plurality of modes. Each mode of operation may be associated with one or more software applications (e.g., one or more software applications that may be controlled using a set of one or more gestures). For example, the myoelectric signal processor 100 may automatically start an instance of one or more software applications associated with a particular mode of operation in response to detecting a transition to the particular mode of operation (and/or close instances of one or more software applications that are not associated with the current mode of operation). Thereby, a user may select a particular application to interact with by performing a gesture to trigger the myoelectric signal processor 100 to transition to a mode of operation associated with the particular application.

In some embodiments, the discrete gesture detector 112 may operate in concert with the continuous gesture detector 114 to improve the accuracy of the gesture detector array 110 to detect gestures being performed by a user. In these embodiments, information from the continuous gesture detector 114 may be employed by the discrete gesture detector 112 to detect discrete gestures with greater accuracy and/or information from the discrete gesture detector 112 may be employed by the continuous gesture detector 114 to detect continuous gestures with greater accuracy. For example, the performance of a particular gesture may change (e.g., increase or decrease) the probability that another gesture is also being performed and/or is about to be performed in the near future. Thereby, the gesture detectors 112 and/or 114 may be configured to use information regarding previously detected gesture(s) to change (e.g., increase or decrease) the confidence associated with detecting one or more gestures associated with the previously detected gesture(s). As a result, a series of one or more detected gestures made over time can be employed to increase the accuracy of subsequently detected gestures.

It should be appreciated that various alterations may be made to the myoelectric signal processor 100 shown in FIG. 1 without departing from the scope of the present disclosure. For example, the discrete and continuous gesture detectors 112 and 114, respectively, may use a single shared model instead of using two separate models (shown as gesture models 113 and 115).

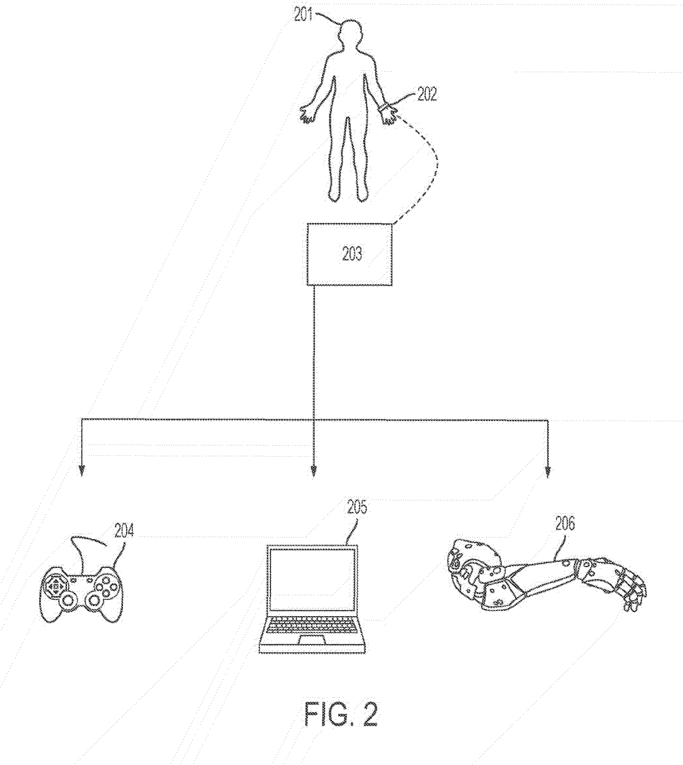

FIG. 2 shows an example system comprising the myoelectric signal processor of FIG. 1 that maps signals from sensors 202 worn by user 201 to control signals that are subsequently provided to a user-interactive program (or, more generally, a user interface) in accordance with some embodiments. Sensors 202 are configured to record signals resulting from the movement of portions of a human body. Sensors 202 may include one or more Inertial Measurement Units (IMUs), which measure a combination of physical aspects of motion, using, for example, an accelerometer and a gyroscope. In some embodiments, IMUs may be used to sense information about the movement of the part of the body on which the IMU is attached and information derived from the sensed data (e.g., position and/or orientation information) may be tracked as the user moves over time. For example, one or more IMUs may be used to track movements of portions of a user's body proximal to the user's torso (e.g., arms, legs) as the user moves over time.

Sensors 202 may also include a plurality of neuromuscular sensors configured to record signals arising from neuromuscular activity in skeletal muscle of a human body. The term "neuromuscular activity" as used herein refers to neural activation of spinal motor neurons that innervate a muscle, muscle activation, muscle contraction, or any combination of the neural activation, muscle activation, and muscle contraction. Neuromuscular sensors may include one or more electromyography (EMG) sensors, one or more mechanomyography (MMG) sensors, one or more sonomyography (SMG) sensors, and/or one or more sensors of any suitable type that are configured to detect neuromuscular signals. In some embodiments, the plurality of neuromuscular sensors may be used to sense muscular activity related to a movement of the part of the body controlled by muscles from which the neuromuscular sensors are arranged to sense the muscle activity. Spatial information (e.g., position and/or orientation information) describing the movement (e.g., for portions of the user's body distal to the user's torso, such as hands and feet) may be predicted based on the sensed neuromuscular signals as the user moves over time.

In embodiments that include at least one IMU and a plurality of neuromuscular sensors, the IMU(s) and neuromuscular sensors may be arranged to detect movement of different parts of the human body. For example, the IMU(s) may be arranged to detect movements of one or more body segments proximal to the torso, whereas the neuromuscular sensors may be arranged to detect movements of one or more body segments distal to the torso. It should be appreciated, however, that sensors 202 may be arranged in any suitable way, and embodiments of the technology described herein are not limited based on the particular sensor arrangement. For example, in some embodiments, at least one IMU and a plurality of neuromuscular sensors may be co-located on a body segment to track movements of body segment using different types of measurements. In one implementation described in more detail below, a plurality of EMG sensors are arranged on a wearable device configured to be worn around the lower arm or wrist of a user. In such an arrangement, the EMG sensors may be configured to determine movement information associated with wrist or hand segments to determine, for example, whether the user has an open or closed hand configuration.

Each of sensors 202 include one or more movement sensing components configured to sense movement information. In the case of IMUs, the movement sensing components may include one or more accelerometers, gyroscopes, magnetometers, or any combination thereof to measure characteristics of body motion, examples of which include, but are not limited to, acceleration, angular velocity, and sensed magnetic field around the body. In the case of neuromuscular sensors, the movement sensing components may include, but are not limited to, electrodes configured to detect electric potentials on the surface of the body (e.g., for EMG sensors) vibration sensors configured to measure skin surface vibrations (e.g., for MMG sensors), and acoustic sensing components configured to measure ultrasound signals (e.g., for SMG sensors) arising from muscle activity.

In some embodiments, at least some of the plurality of sensors 202 are arranged as a portion of a wearable device configured to be worn on or around part of a user's body. For example, in one non-limiting example, an IMU sensor and a plurality of neuromuscular sensors are arranged circumferentially around an adjustable and/or elastic band such as a wristband or armband configured to be worn around a user's wrist or arm. Alternatively, at least some of the sensors may be arranged on a wearable patch configured to be affixed to a portion of the user's body.

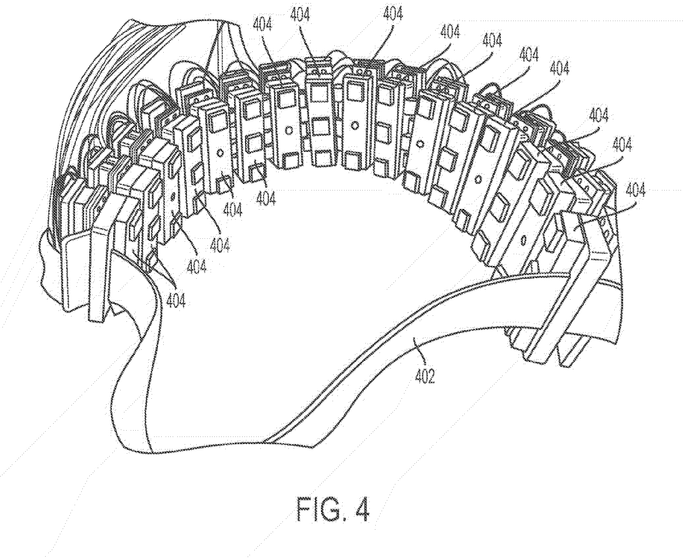

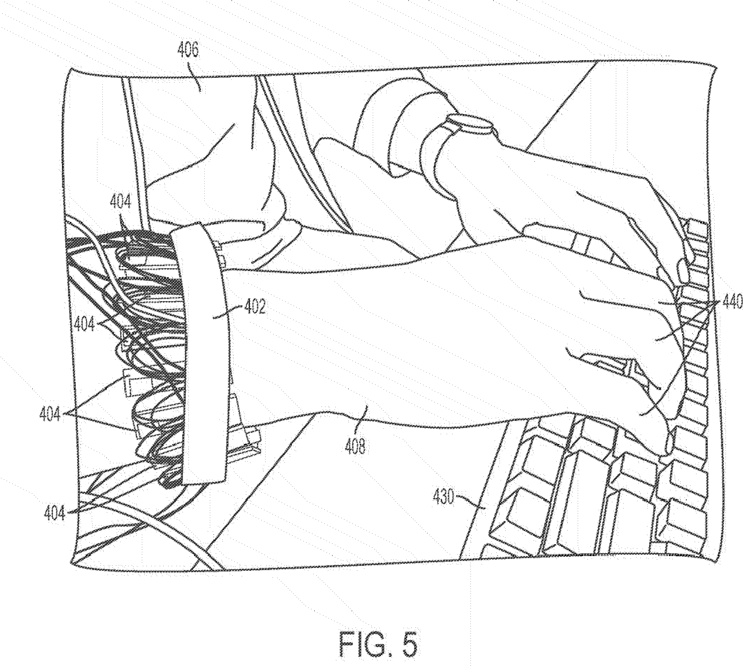

In one implementation, 16 EMG sensors are arranged circumferentially around an elastic band configured to be worn around a user's lower arm. For example, FIG. 4 shows EMG sensors 404 arranged circumferentially around elastic band 402. It should be appreciated that any suitable number of neuromuscular sensors may be used and the number and arrangement of neuromuscular sensors used may depend on the particular application for which the wearable device is used. For example, a wearable armband or wristband may be used to generate control signals for controlling throwing a ball by an avatar in a computer-generated virtual reality environment, whereas a wearable leg or ankle band may be used to generate control signals for controlling kicking a ball by the avatar. For example, as shown in FIG. 5, a user 406 may be wearing elastic band 402 on hand 408. In this way, EMG sensors 404 may be configured to record EMG signals as a user controls keyboard 430 using fingers 440. In some embodiments, elastic band 402 may also include one or more IMUs (not shown), configured to record movement information, as discussed above.

In some embodiments, multiple wearable devices, each having one or more IMUs and/or neuromuscular sensors included thereon may be used to control a device.

The system also includes one or more myoelectric signal processors 203 programmed to communicate with sensors 202. For example, signals recorded by one or more of the sensors 202 may be provided to myoelectric signal processor(s) 203, which may be programmed to perform signal processing, non-limiting examples of which are described above. The myoelectric signal processor(s) 203 may be implemented as, for example, the myoelectric signal processor 100 described above in FIG. 1.

The system of FIG. 2 also includes one or more controllers configured receive a control signal based, at least in part, on processing by myoelectric signal processor(s) 203. As shown, non-limiting examples of a controller include, but are not limited to, a game controller 204, a computer 205 and a prosthetic device 206. As discussed above, myoelectric signal processor(s) 203 may implement one or more trained statistical models configured to generate control signals determined based, at least in part, on signals recorded by sensors 202 worn by a user. One or more control signals determined based on the output of the trained statistical model(s) may be sent to the one or more controllers to control one or more operations of a device associated with the controller. In some embodiments, the controller(s) include a display controller configured to instruct a visual display to display a graphical representation (e.g., a bar on the screen, a graphical representation of the user's body or a graphical representation of a character (e.g., an avatar in a virtual reality environment)) based on the provided control signals. In other embodiments, the controller(s) include a controller of a physical device, such as a robot or prosthetic device. Control signals sent to the controller may be interpreted by the controller to operate one or more components of the robot to move in a manner that corresponds to the movements of the user as sensed using the sensors 202.

Any suitable controller, configured to control one or more physical or virtual devices, may be used in accordance with embodiments of the technology described herein. Non-limiting examples of physical devices that may be controlled include consumer electronics devices (e.g., television, smartphone, computer, laptop, telephone, video camera, photo camera, video game system, appliance, etc.), vehicles (e.g., car, marine vessel, manned aircraft, unmanned aircraft, farm machinery, etc.), robots, weapons, or any other device that may receive control signals from myoelectric signal processor(s) 203.

Non-limiting examples of applications of some embodiments of the techniques described herein include menu navigation, buttons, dials, levers, selection of items, typing without a physical keyboard or keypad in either a desktop or mobile setting, cut/paste operations for document editing, cursor control, scrolling and volume control. Non-limiting examples of applications further include mechanisms for controlling non-visual user interfaces, such as auditory or tactile menus or games. Non-limiting examples of applications also include systems for controlling a prosthetic limb, systems for facilitating gestural communication between people, and manipulation of higher dimensional data, such as three-dimensional and rotational data. Non-limiting examples of applications still further include wake and unlock gestures for phones and computers, biometric codes and keys, and home appliance controls.

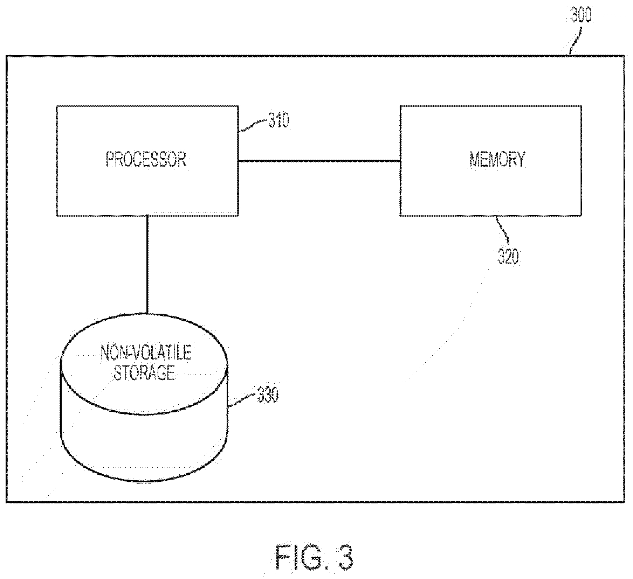

An illustrative implementation of a computing device 300 that may be used in connection with any of the embodiments of the disclosure provided herein is shown in FIG. 3. The computing device 300 may include one or more processors 310 and one or more articles of manufacture that comprise non-transitory computer-readable storage media (e.g., memory 320 and one or more non-volatile storage media 330). The processor 310 may control writing data to and reading data from the memory 320 and the non-volatile storage device 330 in any suitable manner. To perform any of the functionality described herein, the processor 310 may execute one or more processor-executable instructions stored in one or more non-transitory computer-readable storage media (e.g., the memory 320), which may serve as non-transitory computer-readable storage media storing processor-executable instructions for execution by the processor 310.

### Example application of technology for predicting handstate information

Some embodiments are directed to predicting information about the positioning and movements of portions of a user's arm and/or hand represented as a multi-segment articulated rigid body system with joints connecting the multiple segments of the rigid body system. Signals recorded by wearable neuromuscular sensors placed at locations on the user's body are provided as input to a statistical model trained to predict estimates of the position (e.g., absolute position, relative position, orientation) and forces associated with a plurality of rigid segments in a computer-based musculoskeletal representation associated with a hand when a user performs one or more movements. The combination of position information and force information associated with segments of a musculoskeletal representation associated with a hand is colloquially referred to herein as a "handstate" of the musculoskeletal representation. As a user performs different movements, a trained statistical model interprets neuromuscular signals recorded by the wearable neuromuscular sensors into position and force estimates (handstate information) that are used to update the musculoskeletal representation. As the neuromuscular signals are continuously recorded, the musculoskeletal representation is updated in real time and a visual representation of a hand (e.g., within a virtual reality environment) is optionally rendered based on the current handstate estimates.

According to some aspects, all or portions of the human musculoskeletal system can be modeled as a multi-segment articulated rigid body system, with joints forming the interfaces between the different segments and joint angles defining the spatial relationships between connected segments in the model. Constraints on the movement at the joints are governed by the type of joint connecting the segments and the biological structures (e.g., muscles, tendons, ligaments) that restrict the range of movement at the joint. For example, the shoulder joint connecting the upper arm to the torso and the hip joint connecting the upper leg to the torso are ball and socket joints that permit extension and flexion movements as well as rotational movements. By contrast, the elbow joint connecting the upper arm and the forearm and the knee joint connecting the upper leg and the lower leg allow for a more limited range of motion. As described herein, a multi-segment articulated rigid body system is used to model portions of the human musculoskeletal system. However, it should be appreciated that some segments of the human musculoskeletal system (e.g., the forearm), though approximated as a rigid body in the articulated rigid body system, may include multiple rigid structures (e.g., the ulna and radius bones of the forearm) that provide for more complex movement within the segment that is not explicitly considered by the rigid body model. Accordingly, a model of an articulated rigid body system for use with some embodiments of the technology described herein may include segments that represent a combination of body parts that are not strictly rigid bodies.

In kinematics, rigid bodies are objects that exhibit various attributes of motion (e.g., position, orientation, angular velocity, acceleration). Knowing the motion attributes of one segment of the rigid body enables the motion attributes for other segments of the rigid body to be determined based on constraints in how the segments are connected. For example, the hand may be modeled as a multi-segment articulated body with the joints in the wrist and each finger forming the interfaces between the multiple segments in the model. In some embodiments, movements of the segments in the rigid body model can be simulated as an articulated rigid body system in which position (e.g., actual position, relative position, or orientation) information of a segment relative to other segments in the model are predicted using a trained statistical model, as described in more detail below.

The portion of the human body approximated by a musculoskeletal representation as described herein as one non-limiting example, is a hand or a combination of a hand with one or more arm segments and the information used to describe a current state of the positional relationships between segments and force relationships for individual segments or combinations of segments in the musculoskeletal representation is referred to herein as the handstate of the musculoskeletal representation. It should be appreciated, however, that the techniques described herein are also applicable to musculoskeletal representations of portions of the body other than the hand including, but not limited to, an arm, a leg, a foot, a torso, a neck, or any combination of the foregoing.

In addition to spatial (e.g., position/orientation) information, some embodiments are configured to predict force information associated with one or more segments of the musculoskeletal representation. For example, linear forces or rotational (torque) forces exerted by one or more segments may be estimated. Examples of linear forces include, but are not limited to, the force of a finger or hand pressing on a solid object such as a table, and a force exerted when two segments (e.g., two fingers) are pinched together. Examples of rotational forces include, but are not limited to, rotational forces created when segments in the wrist or fingers are twisted or flexed. In some embodiments, the force information determined as a portion of a current handstate estimate includes one or more of pinching force information, grasping force information, or information about co-contraction forces between muscles represented by the musculoskeletal representation.

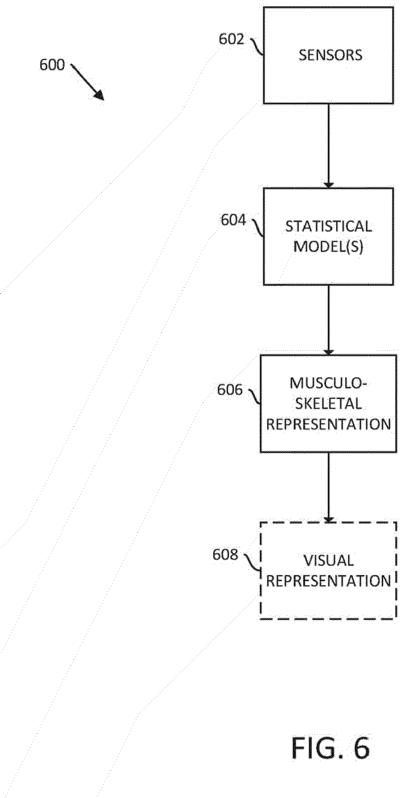

FIG. 6 illustrates a system 600 in accordance with some embodiments. The system includes a plurality of sensors 602 configured to record signals (e.g., sensor signals 102) resulting from the movement of portions of a human body. Sensors 602 may include autonomous sensors. As used herein, the term "autonomous sensors" refers to sensors configured to measure the movement of body segments without requiring the use of external devices, examples of which include, but are not limited to, wearable (e.g. body-mounted) cameras, global positioning systems, or laser scanning systems. In some embodiments, sensors 602 may also include non-autonomous sensors in combination with autonomous sensors. As used herein, the term "non-autonomous sensors" refers to sensors configured to measure the movement of body segments using external devices.

Autonomous sensors may include a plurality of neuromuscular sensors configured to record signals arising from neuromuscular activity in skeletal muscle of a human body. The term "neuromuscular activity" as used herein refers to neural activation of spinal motor neurons that innervate a muscle, muscle activation, muscle contraction, or any combination of the neural activation, muscle activation, and muscle contraction. As discussed above in connection with FIG. 1, neuromuscular sensors used in accordance with some embodiments may include one or more electromyography (EMG) sensors, one or more mechanomyography (MMG) sensors, one or more sonomyography (SMG) sensors, a combination of two or more types of EMG sensors, MMG sensors, and SMG sensors, and/or one or more sensors of any suitable type that are configured to detect neuromuscular signals. In some embodiments, the plurality of neuromuscular sensors may be used to sense muscular activity related to a movement of the part of the body controlled by muscles from which the neuromuscular sensors are arranged to sense the muscle activity. Spatial information (e.g., position and/or orientation information) and force information describing the movement may be predicted based on the sensed neuromuscular signals as the user moves over time.

Autonomous sensors may include one or more IMUs, which measure a combination of physical aspects of motion, using, for example, an accelerometer, a gyroscope, a magnetometer, or any combination of one or more accelerometers, gyroscopes and magnetometers. In some embodiments, IMUs may be used to sense information about the movement of the part of the body on which the IMU is attached and information derived from the sensed data (e.g., position and/or orientation information) may be tracked as the user moves over time. For example, one or more IMUs may be used to track movements of portions of a user's body proximal to the user's torso relative to the sensor (e.g., arms, legs) as the user moves over time.

In embodiments that include at least one IMU and a plurality of neuromuscular sensors, the IMU(s) and neuromuscular sensors may be arranged to detect movement of different parts of the human body. For example, the IMU(s) may be arranged to detect movements of one or more body segments proximal to the torso (e.g., an upper arm), whereas the neuromuscular sensors may be arranged to detect movements of one or more body segments distal to the torso (e.g., a forearm or wrist). It should be appreciated, however, that autonomous sensors may be arranged in any suitable way, and embodiments of the technology described herein are not limited based on the particular sensor arrangement. For example, in some embodiments, at least one IMU and a plurality of neuromuscular sensors may be co-located on a body segment to track movements of body segment using different types of measurements. In one implementation described in more detail below, an IMU sensor and a plurality of EMG sensors are arranged on a wearable device configured to be worn around the lower arm or wrist of a user. In such an arrangement, the IMU sensor may be configured to track movement information (e.g., positioning and/or orientation over time) associated with one or more arm segments, to determine, for example whether the user has raised or lowered their arm, whereas the EMG sensors may be configured to determine movement information associated with wrist or hand segments to determine, for example, whether the user has an open or closed hand configuration.

Each of the autonomous sensors includes one or more sensing components configured to sense information about a user. In the case of IMUs, the sensing components may include one or more accelerometers, gyroscopes, magnetometers, or any combination thereof to measure characteristics of body motion, examples of which include, but are not limited to, acceleration, angular velocity, and sensed magnetic field around the body. In the case of neuromuscular sensors, the sensing components may include, but are not limited to, electrodes configured to detect electric potentials on the surface of the body (e.g., for EMG sensors) vibration sensors configured to measure skin surface vibrations (e.g., for MMG sensors), and acoustic sensing components configured to measure ultrasound signals (e.g., for SMG sensors) arising from muscle activity.

In some embodiments, the output of one or more of the sensing components may be processed using hardware signal processing circuitry (e.g., to perform amplification, filtering, and/or rectification). In other embodiments, at least some signal processing of the output of the sensing components may be performed in software. Thus, signal processing of autonomous signals recorded by the autonomous sensors may be performed in hardware, software, or by any suitable combination of hardware and software, as aspects of the technology described herein are not limited in this respect.

In some embodiments, the recorded sensor data may be processed to compute additional derived measurements that are then provided as input to a statistical model, as described in more detail below. For example, recorded signals from an IMU sensor may be processed to derive an orientation signal that specifies the orientation of a rigid body segment over time. Autonomous sensors may implement signal processing using components integrated with the sensing components, or at least a portion of the signal processing may be performed by one or more components in communication with, but not directly integrated with the sensing components of the autonomous sensors.

In some embodiments, at least some of the plurality of autonomous sensors are arranged as a portion of a wearable device configured to be worn on or around part of a user's body. For example, in one non-limiting example, an IMU sensor and a plurality of neuromuscular sensors are arranged circumferentially around an adjustable and/or elastic band such as a wristband or armband configured to be worn around a user's wrist or arm as described above in connection with FIGS. 4 and 5. Alternatively, at least some of the autonomous sensors may be arranged on a wearable patch configured to be affixed to a portion of the user's body. In some embodiments, multiple wearable devices, each having one or more IMUs and/or neuromuscular sensors included thereon may be used to predict musculoskeletal position information for movements that involve multiple parts of the body.

In some embodiments, sensors 602 only includes a plurality of neuromuscular sensors (e.g., EMG sensors). In other embodiments, sensors 602 includes a plurality of neuromuscular sensors and at least one "auxiliary" sensor configured to continuously record a plurality of auxiliary signals. Examples of auxiliary sensors include, but are not limited to, other autonomous sensors such as IMU sensors, and non-autonomous sensors such as an imaging device (e.g., a camera), a radiation-based sensor for use with a radiation-generation device (e.g., a laser-scanning device), or other types of sensors such as a heart-rate monitor.

In one implementation, as discussed above, FIG. 4 shows EMG sensors 404 arranged circumferentially around elastic band 402. In some embodiments, a wearable armband or wristband may be used to predict musculoskeletal position information for hand based motor tasks such as manipulating a virtual or physical object, whereas a wearable leg or ankle band may be used to predict musculoskeletal position information for foot based motor tasks such as kicking a virtual or physical ball.

System 600 also includes one or more computer processors programmed to communicate with sensors 602. For example, signals recorded by one or more of the sensors may be provided to the processor(s), which may be programmed to execute one or more machine learning algorithms that process signals output by the sensors 602 to train one or more statistical models 604, and the trained (or retrained) statistical model(s) 604 may be stored for later use in generating a musculoskeletal representation 606, as described in more detail below. Non-limiting examples of statistical models that may be used in accordance with some embodiments to predict handstate information based on recorded signals from sensors 602 are discussed in more detail below.

System 600 also optionally includes a display controller configured to display a visual representation 608 (e.g., of a hand). As discussed in more detail below, one or more computer processors may implement one or more trained statistical models configured to predict handstate information based, at least in part, on signals recorded by sensors 602. The predicted handstate information is used to update the musculoskeletal representation 606, which is then optionally used to render a visual representation 608 based on the updated musculoskeletal representation incorporating the current handstate information. Real-time reconstruction of the current handstate and subsequent rendering of the visual representation reflecting the current handstate information in the musculoskeletal model may provide visual feedback to the user about the effectiveness of the trained statistical model to accurately represent an intended handstate. Not all embodiments of system 600 include components configured to render a visual representation. For example, in some embodiments, handstate estimates output from the trained statistical model and a corresponding updated musculoskeletal representation are used to determine a state of a user's hand (e.g., in a virtual reality environment) even though a visual representation based on the updated musculoskeletal representation is not rendered.

In some embodiments, a computer application configured to simulate a virtual reality environment may be instructed to display a visual representation of the user's hand. Positioning, movement, and/or forces applied by portions of the hand within the virtual reality environment may be displayed based on the output of the trained statistical model(s). The visual representation may be dynamically updated based on current reconstructed handstate information as continuous signals are recorded by the sensors 602 and processed by the trained statistical model(s) 604 to provide an updated computer-generated representation of the user's movement that is updated in real-time.

As discussed above, some embodiments are directed to using a statistical model for predicting musculoskeletal information based on signals recorded from wearable autonomous sensors. The statistical model may be used to predict the musculoskeletal position information without having to place sensors on each segment of the rigid body that is to be represented in the computer-generated musculoskeletal representation. As discussed briefly above, the types of joints between segments in a multi-segment articulated rigid body model constrain movement of the rigid body. Additionally, different individuals tend to move in characteristic ways when performing a task that can be captured in statistical patterns of individual user behavior. At least some of these constraints on human body movement may be explicitly incorporated into statistical models used for prediction in accordance with some embodiments. Additionally or alternatively, the constraints may be learned by the statistical model though training based on recorded sensor data. Constraints imposed in the construction of the statistical model are those set by anatomy and the physics of a user's body, while constraints derived from statistical patterns are those set by human behavior for one or more users from which sensor measurements are measured. As described in more detail below the constraints may comprise part of the statistical model itself being represented by information (e.g., connection weights between nodes) in the model.

As discussed above, some embodiments are directed to using a statistical model for predicting handstate information to enable the generation and/or real-time update of a computer-based musculoskeletal representation. The statistical model may be used to predict the handstate information based on IMU signals, neuromuscular signals (e.g., EMG, MMG, and SMG signals), external device signals (e.g., camera or laser-scanning signals), or a combination of IMU signals, neuromuscular signals, and external device signals detected as a user performs one or more movements.

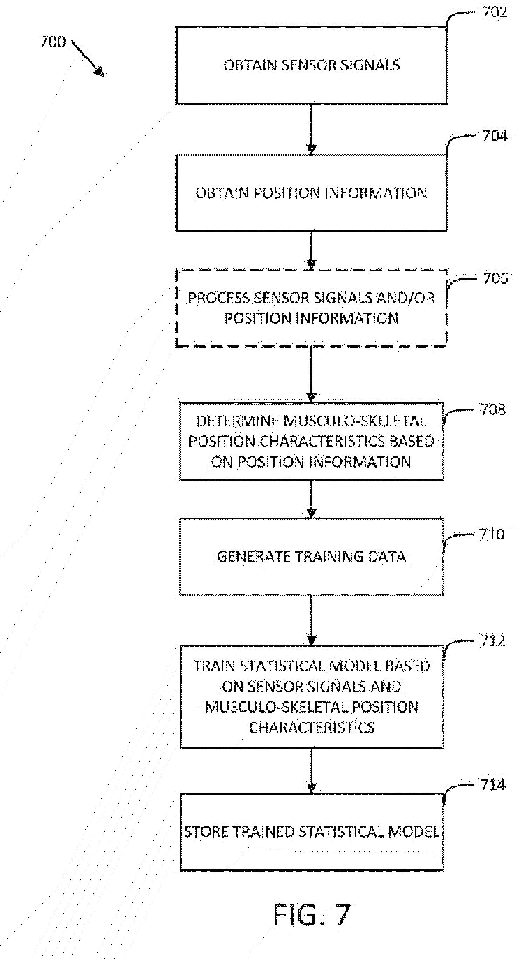

FIG. 7 describes a process 700 for generating (sometimes termed "training" herein) a statistical model using signals recorded from sensors 602. Process 700 may be executed by any suitable computing device(s), as aspects of the technology described herein are not limited in this respect. For example, process 700 may be executed by one or more computer processors described with reference to FIG. 6. As another example, one or more acts of process 700 may be executed using one or more servers (e.g., servers included as a part of a cloud computing environment). For example, at least a portion of act 710 relating to training of a statistical model (e.g., a neural network) may be performed using a cloud computing environment.

Process 700 begins at act 702, where a plurality of sensor signals are obtained for one or multiple users performing one or more movements (e.g., typing on a keyboard). In some embodiments, the plurality of sensor signals may be recorded as part of process 700. In other embodiments, the plurality of sensor signals may have been recorded prior to the performance of process 700 and are accessed (rather than recorded) at act 702.

In some embodiments, the plurality of sensor signals may include sensor signals recorded for a single user performing a single movement or multiple movements. The user may be instructed to perform a sequence of movements for a particular task (e.g., opening a door) and sensor signals corresponding to the user's movements may be recorded as the user performs the task he/she was instructed to perform. The sensor signals may be recorded by any suitable number of sensors located in any suitable location(s) to detect the user's movements that are relevant to the task performed. For example, after a user is instructed to perform a task with the fingers of his/her right hand, the sensor signals may be recorded by multiple neuromuscular sensors circumferentially (or otherwise) arranged around the user's lower right arm to detect muscle activity in the lower right arm that give rise to the right hand movements and one or more IMU sensors arranged to predict the joint angle of the user's arm relative to the user's torso. As another example, after a user is instructed to perform a task with his/her leg (e.g., to kick an object), sensor signals may be recorded by multiple neuromuscular sensors circumferentially (or otherwise) arranged around the user's leg to detect muscle activity in the leg that give rise to the movements of the foot and one or more IMU sensors arranged to predict the joint angle of the user's leg relative to the user's torso.

In some embodiments, the sensor signals obtained in act 702 correspond to signals from one type of sensor (e.g., one or more IMU sensors or one or more neuromuscular sensors) and a statistical model may be trained based on the sensor signals recorded using the particular type of sensor, resulting in a sensor-type specific trained statistical model. For example, the obtained sensor signals may comprise a plurality of EMG sensor signals arranged around the lower arm or wrist of a user and the statistical model may be trained to predict musculoskeletal position information for movements of the wrist and/or hand during performance of a task such as grasping and twisting an object such as a doorknob.

In embodiments that provide predictions based on multiple types of sensors (e.g., IMU sensors, EMG sensors, MMG sensors, SMG sensors), a separate statistical model may be trained for each of the types of sensors and the outputs of the sensor-type specific models may be combined to generate a musculoskeletal representation of the user's body. In other embodiments, the sensor signals obtained in act 702 from two or more different types of sensors may be provided to a single statistical model that is trained based on the signals recorded from the different types of sensors. In one illustrative implementation, an IMU sensor and a plurality of EMG sensors are arranged on a wearable device configured to be worn around the forearm of a user, and signals recorded by the IMU and EMG sensors are collectively provided as inputs to a statistical model, as discussed in more detail below.

In some embodiments, the sensor signals obtained in act 702 are recorded at multiple time points as a user performs one or multiple movements. As a result, the recorded signal for each sensor may include data obtained at each of multiple time points. Assuming that *n* sensors are arranged to simultaneously measure the user's movement information during performance of a task, the recorded sensor signals for the user may comprise a time series of K *n*-dimensional vectors {**xₖ** | 1 ≤ k ≤ K} at time points t₁, t₂, ..., t_{K} during performance of the movements.

In some embodiments, a user may be instructed to perform a task multiple times and the sensor signals and position information may be recorded for each of multiple repetitions of the task by the user. In some embodiments, the plurality of sensor signals may include signals recorded for multiple users, each of the multiple users performing the same task one or more times. Each of the multiple users may be instructed to perform the task and sensor signals and position information corresponding to that user's movements may be recorded as the user performs (once or repeatedly) the task he/she was instructed to perform. When sensor signals are collected by multiple users which are combined to generate a statistical model, an assumption is that different users employ similar musculoskeletal positions to perform the same movements. Collecting sensor signals and position information from a single user performing the same task repeatedly and/or from multiple users performing the same task one or multiple times facilitates the collection of sufficient training data to generate a statistical model that can accurately predict musculoskeletal position information associated with performance of the task.

In some embodiments, a user-independent statistical model may be generated based on training data corresponding to the recorded signals from multiple users, and as the system is used by a user, the statistical model is trained based on recorded sensor data such that the statistical model learns the user-dependent characteristics to refine the prediction capabilities of the system for the particular user.

In some embodiments, the plurality of sensor signals may include signals recorded for a user (or each of multiple users) performing each of multiple tasks one or multiple times. For example, a user may be instructed to perform each of multiple tasks (e.g., grasping an object, pushing an object, and pulling open a door) and signals corresponding to the user's movements may be recorded as the user performs each of the multiple tasks he/she was instructed to perform. Collecting such data may facilitate developing a statistical model for predicting musculoskeletal position information associated with multiple different actions that may be taken by the user. For example, training data that incorporates musculoskeletal position information for multiple actions may facilitate generating a statistical model for predicting which of multiple possible movements a user may be performing.

As discussed above, the sensor data obtained at act 702 may be obtained by recording sensor signals as each of one or multiple users performs each of one or more tasks one or more multiple times. As the user(s) perform the task(s), position information describing the spatial position of different body segments during performance of the task(s) may be obtained in act 704. In some embodiments, the position information is obtained using one or more external devices or systems that track the position of different points on the body during performance of a task. For example, a motion capture system, a laser scanner, a device to measure mutual magnetic induction, or some other system configured to capture position information may be used. As one non-limiting example, a plurality of position sensors may be placed on segments of the fingers of the right hand and a motion capture system may be used to determine the spatial location of each of the position sensors as the user performs a task such as grasping an object. The sensor data obtained at act 702 may be recorded simultaneously with recording of the position information obtained in act 704. In this example, position information indicating the position of each finger segment over time as the grasping motion is performed is obtained.

Next, process 700 proceeds to act 706, where the sensor signals obtained in act 702 and/or the position information obtained in act 704 are optionally processed. For example, the sensor signals or the position information signals may be processed using amplification, filtering, rectification, or other types of signal processing.

Next, process 700 proceeds to act 708, where musculoskeletal position characteristics are determined based on the position information (as collected in act 704 or as processed in act 706). In some embodiments, rather than using recorded spatial (e.g., x, y, z) coordinates corresponding to the position sensors as training data to train the statistical model, a set of derived musculoskeletal positon characteristic values are determined based on the recorded position information, and the derived values are used as training data for training the statistical model. For example, using information about the constraints between connected pairs of rigid segments in the articulated rigid body model, the position information may be used to determine joint angles that define angles between each connected pair of rigid segments at each of multiple time points during performance of a task. Accordingly, the position information obtained in act 704 may be represented by a vector of n joint angles at each of a plurality of time points, where n is the number of joints or connections between segments in the articulated rigid body model.

Next, process 700 proceeds to act 710, where the time series information obtained at acts 702 and 708 is combined to create training data used for training a statistical model at act 710. The obtained data may be combined in any suitable way. In some embodiments, each of the sensor signals obtained at act 702 may be associated with a task or movement within a task corresponding to the musculoskeletal position characteristics (e.g., joint angles) determined based on the positional information recorded in act 704 as the user performed the task or movement. In this way, the sensor signals may be associated with musculoskeletal position characteristics (e.g., joint angles) and the statistical model may be trained to predict that the musculoskeletal representation will be characterized by particular musculoskeletal position characteristics between different body segments when particular sensor signals are recorded during performance of a particular task.

In embodiments comprising sensors of different types (e.g., IMU sensors and neuromuscular sensors) configured to simultaneously record different types of movement information during performance of a task, the sensor data for the different types of sensors may be recorded using the same or different sampling rates. When the sensor data is recorded at different sampling rates, at least some of the sensor data may be resampled (e.g., up-sampled or down-sampled) such that all sensor data provided as input to the statistical model corresponds to time series data at the same time resolution. Resampling at least some of the sensor data may be performed in any suitable way including, but not limited to using interpolation for upsampling and using decimation for downsampling.

In addition to or as an alternative to resampling at least some of the sensor data when recorded at different sampling rates, some embodiments employ a statistical model configured to accept multiple inputs asynchronously. For example, the statistical model may be configured to model the distribution of the "missing" values in the input data having a lower sampling rate. Alternatively, the timing of training of the statistical model occur asynchronously as input from multiple sensor data measurements becomes available as training data.

Next, process 700 proceeds to act 712, where a statistical model for predicting musculoskeletal position information is trained using the training data generated at act 710. The statistical model being trained may take as input a sequence of data sets each of the data sets in the sequence comprising an n-dimensional vector of sensor data. The statistical model may provide output that indicates, for each of one or more tasks or movements that may be performed by a user, the likelihood that the musculoskeletal representation of the user's body will be characterized by a set of musculoskeletal position characteristics (e.g., a set of joint angles between segments in an articulated multi-segment body model). For example, the statistical model may take as input a sequence of vectors {**xₖ** | 1 ≤ k ≤ K} generated using measurements obtained at time points t₁, t₂, ..., t_{K},_{_}where the ith component of vector **xⱼ** is a value measured by the ith sensor at time tⱼ and/or derived from the value measured by the ith sensor at time tⱼ. Based on such input, the statistical model may provide output indicating, a probability that a musculoskeletal representation of the user's body will be characterized by a set of musculoskeletal position characteristics. As one non-limiting example, the statistical model may be trained to predict a set of joint angles for segments in the fingers in the hand over time as a user grasps an object. In this example, the trained statistical model may output, a set of predicted joint angles for joints in the hand corresponding to the sensor input.

In some embodiments, the statistical model may be a neural network and, for example, may be a recurrent neural network. In some embodiments, the recurrent neural network may be a long short-term memory (LSTM) neural network. It should be appreciated, however, that the recurrent neural network is not limited to being an LSTM neural network and may have any other suitable architecture. For example, in some embodiments, the recurrent neural network may be a fully recurrent neural network, a recursive neural network, a variational autoencoder, a Hopfield neural network, an associative memory neural network, an Elman neural network, a Jordan neural network, an echo state neural network, a second order recurrent neural network, and/or any other suitable type of recurrent neural network. In other embodiments, neural networks that are not recurrent neural networks may be used. For example, deep neural networks, convolutional neural networks, and/or feedforward neural networks, may be used.

In some of the embodiments in which the statistical model is a neural network, the output layer of the neural network may provide a set of output values corresponding to a respective set of possible musculoskeletal position characteristics (e.g., joint angles). In this way, the neural network may operate as a non-linear regression model configured to predict musculoskeletal position characteristics from raw or pre-processed sensor measurements. It should be appreciated that, in some embodiments, any other suitable non-linear regression model may be used instead of a neural network, as aspects of the technology described herein are not limited in this respect.

It should be appreciated that aspects of the technology described herein are not limited to using neural networks, as other types of statistical models may be employed in some embodiments. For example, in some embodiments, the statistical model may comprise a hidden Markov model, a Markov switching model with the switching allowing for toggling among different dynamic systems, dynamic Bayesian networks, and/or any other suitable graphical model having a temporal component. Any such statistical model may be trained at act 712 using the sensor data obtained at act 702.

As another example, in some embodiments, the statistical model may take as input, features derived from the sensor data obtained at act 702. In such embodiments, the statistical model may be trained at act 712 using features extracted from the sensor data obtained at act 702. The statistical model may be a support vector machine, a Gaussian mixture model, a regression based classifier, a decision tree classifier, a Bayesian classifier, and/or any other suitable classifier, as aspects of the technology described herein are not limited in this respect. Input features to be provided as training data to the statistical model may be derived from the sensor data obtained at act 702 in any suitable way. For example, the sensor data may be analyzed as time series data using wavelet analysis techniques (e.g., continuous wavelet transform, discrete-time wavelet transform, etc.), Fourier-analytic techniques (e.g., short-time Fourier transform, Fourier transform, etc.), and/or any other suitable type of time-frequency analysis technique. As one non-limiting example, the sensor data may be transformed using a wavelet transform and the resulting wavelet coefficients may be provided as inputs to the statistical model.

In some embodiments, at act 712, values for parameters of the statistical model may be estimated from the training data generated at act 710. For example, when the statistical model is a neural network, parameters of the neural network (e.g., weights) may be estimated from the training data. In some embodiments, parameters of the statistical model may be estimated using gradient descent, stochastic gradient descent, and/or any other suitable iterative optimization technique. In embodiments where the statistical model is a recurrent neural network (e.g., an LSTM), the statistical model may be trained using stochastic gradient descent and backpropagation through time. The training may employ a cross-entropy loss function and/or any other suitable loss function, as aspects of the technology described herein are not limited in this respect.

Next, process 700 proceeds to act 714, where the trained statistical model is stored (e.g., in datastore - not shown). The trained statistical model may be stored using any suitable format, as aspects of the technology described herein are not limited in this respect. In this way, the statistical model generated during execution of process 700 may be used at a later time, for example, to predict musculoskeletal position information (e.g., joint angles) for a given set of input sensor data, as described below.

In some embodiments, sensor signals are recorded from a plurality of sensors (e.g., arranged on or near the surface of a user's body) that record activity associated with movements of the body during performance of a task. The recorded signals may be optionally processed and provided as input to a statistical model trained using one or more techniques described above in connection with FIG. 7. In some embodiments that continuously record autonomous signals, the continuously recorded signals (raw or processed) may be continuously or periodically provided as input to the trained statistical model for prediction of musculoskeletal position information (e.g., joint angles) for the given set of input sensor data. As discussed above, in some embodiments, the trained statistical model is a user-independent model trained based on autonomous sensor and position information measurements from a plurality of users. In other embodiments, the trained model is a user-dependent model trained on data recorded from the individual user from which the data associated with the sensor signals is also acquired.

After the trained statistical model receives the sensor data as a set of input parameters, the predicted musculoskeletal position information is output from the trained statistical model. As discussed above, in some embodiments, the predicted musculoskeletal position information may comprise a set of musculoskeletal position information values (e.g., a set of joint angles) for a multi-segment articulated rigid body model representing at least a portion of the user's body. In other embodiments, the musculoskeletal position information may comprises a set of probabilities that the user is performing one or more movements from a set of possible movements.

In some embodiments, after musculoskeletal position information is predicted, a computer-based musculoskeletal representation of the user's body is generated based, at least in part, on the musculoskeletal position information output from the trained statistical model. The computer-based musculoskeletal representation may be generated in any suitable way. For example, a computer-based musculoskeletal model of the human body may include multiple rigid body segments, each of which corresponds to one or more skeletal structures in the body. For example, the upper arm may be represented by a first rigid body segment, the lower arm may be represented by a second rigid body segment the palm of the hand may be represented by a third rigid body segment, and each of the fingers on the hand may be represented by at least one rigid body segment (e.g., at least fourth-eighth rigid body segments). A set of joint angles between connected rigid body segments in the musculoskeletal model may define the orientation of each of the connected rigid body segments relative to each other and a reference frame, such as the torso of the body. As new sensor data is measured and processed by the statistical model to provide new predictions of the musculoskeletal position information (e.g., an updated set of joint angles), the computer-based musculoskeletal representation of the user's body may be updated based on the updated set of joint angles determined based on the output of the statistical model. In this way the computer-based musculoskeletal representation is dynamically updated in real-time as sensor data is continuously recorded.

The computer-based musculoskeletal representation may be represented and stored in any suitable way, as embodiments of the technology described herein are not limited with regard to the particular manner in which the representation is stored. Additionally, although referred to herein as a "musculoskeletal" representation, to reflect that muscle activity may be associated with the representation in some embodiments, as discussed in more detail below, it should be appreciated that some musculoskeletal representations used in accordance with some embodiments may correspond to skeletal structures, muscular structures or a combination of skeletal structures and muscular structures in the body.

In some embodiments, direct measurement of neuromuscular activity and/or muscle activity underlying the user's movements may be combined with the generated musculoskeletal representation. Measurements from a plurality of sensors placed at locations on a user's body may be used to create a unified representation of muscle recruitment by superimposing the measurements onto a dynamically-posed skeleton. In some embodiments, muscle activity sensed by neuromuscular sensors and/or information derived from the muscle activity (e.g., force information) may be combined with the computer-generated musculoskeletal representation in real time.

In some embodiments, the computer-based musculoskeletal representation generated by the system 600 may be employed to control operation of any of a variety of devices, such as desktop computers, laptops, gaming systems, and/or prosthetic devices. In these embodiments, gesture models may be employed that describe the relationship between detected muscle activity or any derivative thereof, such as the musculoskeletal representation, and particular control signals. Thereby, the gestures performed by a user may be recognized by the myoelectric user interface and employed to control operation of a device. For example, the system may detect a trigger fire gesture (e.g., a gesture where the index finger is moved from an extended position in a curling motion towards the body) using a gesture model (e.g., a model trained to identify the trigger finger gesture) and generate a control signal based on the detected gesture, such as a control signal to skip a song on a music playback device.

The particular control signal output by the system may depend on, for example, a mode of operation of the system. The system may have a free-form mode of operation where information regarding the musculoskeletal representation of a body part of the user (e.g., a hand of the user) is output. Free-form mode may be employed to interact with virtual environments in virtual reality and/or augmented reality interfaces. For example, the output information regarding the musculoskeletal representation of a hand of a user may be employed by a virtual reality application to enable movements of a virtual hand in a virtual environment to exactly mimic the movements of the user's hand. The output information regarding the musculoskeletal representation of a hand of a user may be, for example, constrained or otherwise simplified to enable developers to more easily construct applications that utilize the output information. For example, the system may include a snap-to-grid feature where instead of estimating joint angles freely for a hand, the joint angles may be snapped to one of the allowed values in a predefined set of hand states (e.g., template hand states) that may be output. Thereby, a developer may only have to construct an application that handles the predefined set of hand states, instead of all possible hand states. Further, interpolation techniques may be employed to smooth any changes between changes in hand state to provide life-like movements without the added complexity of estimating unconstrained joint angles.

The system may be configured to operate in other modes separate and apart from the free-form mode. The system may be configured to operate in a gesture mode where specific gestures, such as continuous gestures and discrete gestures performed by a user, may be mapped to a specific control output (e.g., a command). Thereby, only a selection of control signals indicative of whether particular gestures have been triggered may be output (in contrast to free-form mode where information regarding the generated musculoskeletal representation may be output). A continuous gesture may be, for example, a gesture that maps to a control signal that is variable between at least two boundaries. For example, a gesture that maps to a lever position control signal that varies in a range between an upper boundary (e.g., lever at highest position) and a lower boundary (e.g., level at lowest position) may be a continuous gesture. The continuous gesture may map to a discrete number of states between the two boundaries to simplify implementation. For example, the range between a lower boundary of 1 and an upper boundary of 2 may be subdivided into a fixed number of increments (e.g., ten increments of 0. 1 in size). Thereby, the continuous gesture may map to one of the fixed number of states between the lower and upper boundaries. A discrete gesture may be, for example, a gesture that maps to a control signal that varies between a discrete set of states (e.g., two states, three states, four states, or five states). For example, a gesture that maps to a button press control signal that has two states (e.g., button not depressed / button depressed) may be a discrete gesture. A discrete gesture may differ from a continuous gesture in that, for example, the discrete set of states may not define a range.

The system may be configured to accurately detect any combination of gestures in gesture mode performed simultaneously or in direct succession. Thereby, the potential unique control combinations may be substantially increased. For example, only five unique control combinations of particular finger/thumb movements may be capable of being detected if only one finger/thumb movement can be detected at a time. In contrast, a system that can detect the particular finger/thumb movements performed in any combination allows 256 different combinations to be detected.

The system may be configured to detect gestures in any of variety of ways. In some embodiments, the system may employ gesture model(s) to detect specific gestures. The gesture models may be, for example, statistical models that are trained to detect a specific gesture(s) using information captured (and/or generated) while a user is perform the specific gesture(s). The system may compare these gesture models to incoming information to determine which gesture models match the incoming information (e.g., are within a threshold distance of the incoming information). The gestures associated with the gesture models that match the incoming information may be determined to have been performed while those that do not match may be determined to have not been performed.

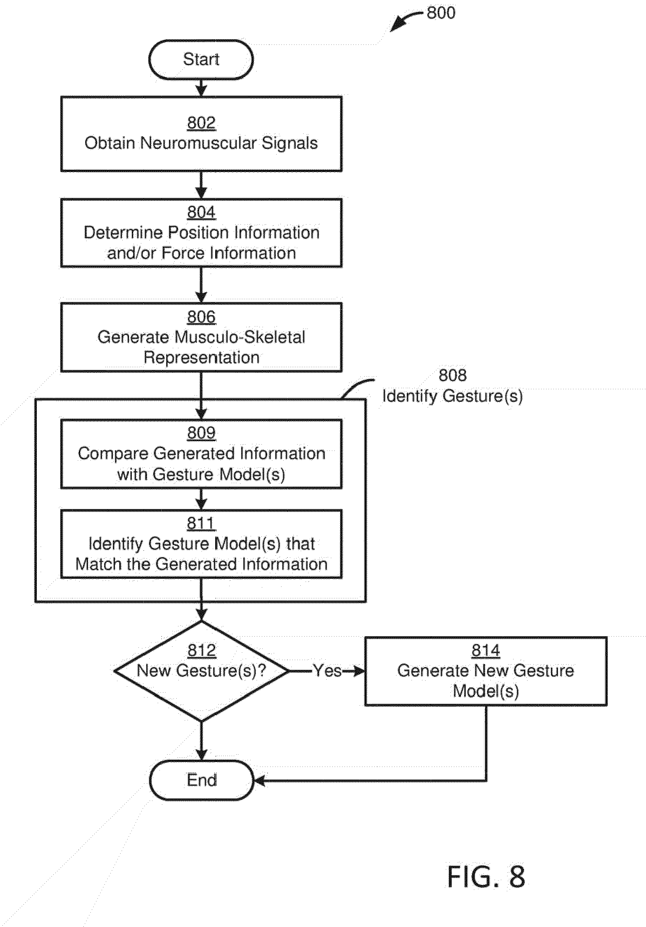

FIG. 8 is a flow diagram for an example method 800 of recognizing gestures in neuromuscular signals in accordance with some embodiments of the technology described herein. The method 800 may be performed by, for example, system 600 described above. As shown, the method 800 comprises an act 802 of obtaining neuromuscular signals, an act 804 of determining position information and/or force information, an act 806 of generating musculoskeletal representation, an act 808 of identifying gesture(s) that may include an act 809 of comparing generated information with gesture model(s) and an act 811 of identifying gesture models that match the generated information, an act 812 of determining whether the generated information includes new gestures, and an act 814 of generating a new gesture model.

In act 802, the system may obtain neuromuscular signals. The system may obtain the neuromuscular signals from neuromuscular sensors configured to record the neuromuscular signals from the user. These neuromuscular sensors may be arranged in one or more wearable devices that may be worn by a user (e.g., worn about a portion of an arm of a user).

In act 804, the system may determine position information and/or force information using the neuromuscular signals obtained in act 802. The system may determine the position information and/or force information using, for example, one or more trained statistical models as described above. The position information may include, for example, a set of joint angles that describe a spatial relationship between two or more connected segments of the musculoskeletal representation of a body part of the user, such as a hand of the user. The force information may describe a force exerted by at least one segment of a musculoskeletal representation of a body part of the user, such as a hand of the user.

In act 806, the system may generate a musculoskeletal representation of body part(s) of the user, such as a hand of the user, based on the position information and/or the force information generated in act 804. The system may generate the musculoskeletal representation of body part(s) of the user using any of the techniques described herein, such as those described above with reference to FIG. 6. For example, the system may employ the position information to identify the positions of joints in the musculoskeletal representation and/or use the force information to identify the force exerted on segments in the musculoskeletal representation.

In act 808, the system may identify gesture(s) performed by a user from the generated information such as the position information and/or force information generated in act 804 and/or the musculoskeletal representation of body part(s) of the user generated in act 806. The identified gestures may be, for example, continuous gestures and/or discrete gestures. Further, any number and combination of gestures may be identified. For example, the system may identify that a discrete gesture of holding a knob (e.g., a volume knob) performed simultaneously with a continuous gesture of rotating the knob (e.g., rotating the volume knob to change a volume level).

The system may identify the gestures using any of a variety of techniques. In some embodiments, the system may employ gesture model(s) to identify the gestures. The gesture model associated with a particular gesture may, for example, describe the particular characteristics that define the gesture. In these embodiments, the system may compare the gesture models with the generated information in act 809 by computing a distance between the generated information and the gesture models that is representative of the degree of similarity between the generated information and the gesture models.

The particular components of the generated information compared with the gesture models performed by the system may depend on the construction of the gesture model. For example, the gesture model for a particular gesture may specify one or more values for a subset of joint angles for particular connected segments of the musculoskeletal model. In this example, the system may compare the joint angles in the position information and the one or more values for the same joint angles specified in the gesture model. In another example, the gesture model for a particular gesture may specify one or more values for a force exerted by a subset of one or more segments of the musculoskeletal model. In this example, the system may compare the forces in the force information with the one or more values for the same forces in the gesture model. In yet another example, the gesture model may specify both one or more values for a subset of joint angles for particular connected segments of the musculoskeletal model and one or more values for a force exerted by a subset of one or more segments of the musculoskeletal model. In this example, the system may compare the forces in the force information and the joint angles in the position information with the one or more values for the same forces in the gesture model and the one or more values for the joint angles in the gesture model, respectively.

The generated distance between the generated information and the gesture models may, in turn, be used in act 811 to identify gesture model(s) that match the generated information. The gesture model(s) that match the generated information may be those gesture model(s) that are within a threshold distance of the generated information. For example, the gesture model for a particular gesture may specify one or more values for a subset of joint angles for particular connected segments of the musculoskeletal model. In this example, the system may determine whether the joint angles in the position information are within a threshold distance from the one or more values for the same joint angles specified in the gesture model. In another example, the gesture model for a particular gesture may specify one or more values for a force exerted by a subset of one or more segments of the musculoskeletal model. In this example, the system may determine whether the forces in the force information are within a threshold distance from the one or more values for the same forces in the gesture model. In yet another example, the gesture model may specify both one or more values for a subset of joint angles for particular connected segments of the musculoskeletal model and one or more values for a force exerted by a subset of one or more segments of the musculoskeletal model. In this example, the system may determine both whether the forces in the force information are within a threshold distance from the one or more values for the same forces in the gesture model and whether the joint angles in the position information are within a threshold distance from the one or more values for the same joint angles specified in the gesture model.

It should be appreciated that information separate and apart from the generated information may be employed to identify gesture(s) in act 808. For example, information from auxiliary sensors configured to generate auxiliary signals may also be employed. Example auxiliary sensors include IMUs that measure movement of a body part of the user, such as finger, a wrist, and/or a hand of the user.

In act 812, the system may determine whether the generated information, such as the position information and/or force information generated in act 804 and/or the musculoskeletal representation of body part(s) of the user generated in act 806, contains new gestures. The system may determine that the generated information contains a new gesture responsive to one or more criteria being met. The system may determine that the generated information comprises a new gesture responsive to the generated information containing user movement that is not accounted for by the movement associated with the gestures detected in act 808. For example, the system may determine that the generated information comprises a new gesture when no gesture was detected in act 808 while the generated information shows user movement (e.g., movement of a finger, movement of a wrist, etc.). In another example, the system may determine that the generated information comprises a new gesture when only gestures involving one body part (e.g., a wrist) of a user while the generated information also shows user movement of another body part (e.g., a finger). If the system determines that the generated information comprises a new gesture, the system may proceed to act 814 of generating a new gesture model. Otherwise, process 800 may end.

In act 814, the system may generate new gesture model(s) based on the generated information, such as the position information and/or force information generated in act 804 and/or the musculoskeletal representation of body part(s) of the user generated in act 806. The system may generate the new gesture model(s) by determining the portions of the generated information that correspond to the new gesture (as opposed to other gestures identified in act 808). The portion of the generated information that corresponds to the new gesture(s) may be employed to train a statistical model to detect the new gesture model.

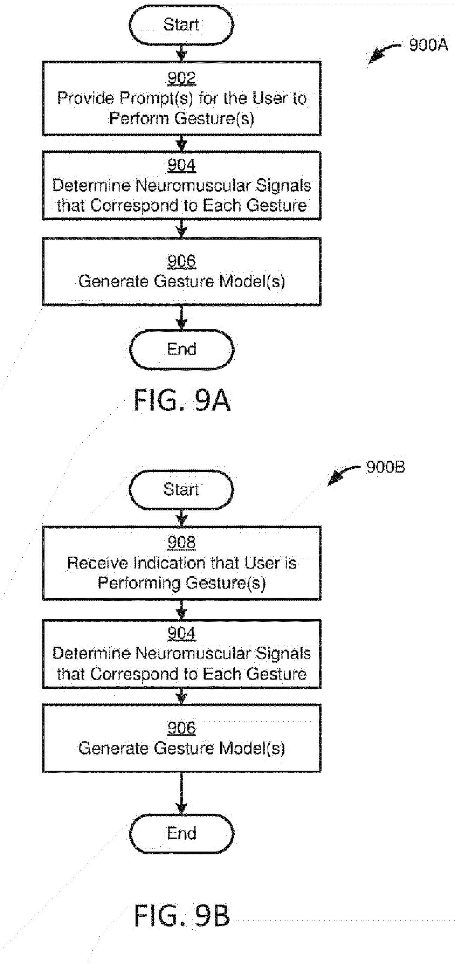

FIG. 9A is a flow diagram for an example method 900A of generating new gesture models in accordance with some embodiments of the technology described herein. The method 900A may be performed by, for example, system 600. As shown, the method 900A comprises an act 902 of providing prompt(s) for the user to perform gesture(s), an act 904 of determining neuromuscular signals that correspond to each gesture, and an act 906 of generating gesture model(s).

In act 902, the system may provide prompt(s) for the user to perform gesture(s). The prompt(s) may be audio and/or visual requests provided to the user to perform gestures simultaneously or in direct succession. For example, the system may provide a series of prompts to move each finger from an extended position to a curled position.

In act 904, the system may determine neuromuscular signals that correspond to each gesture. The system may, for example, segment the neuromuscular signals into a plurality of sections that each corresponds to a gesture performed by the user (e.g., in response to a prompt). This segmentation may be performed using any of a variety of techniques. For example, unsupervised time segmentation and alignment techniques may be employed such as expectation-maximization estimation and dynamic time warping.

In act 906, the system may generate gesture models based on the segmented neuromuscular signals. For example, the neuromuscular signals contained in each segment may be employed to train a specific model that, once trained, will be configured to detect the gesture contained in the segment of neuromuscular signals.

It should be appreciated that various alterations may be made to the process 900A without departing from the scope of the present disclosure. For example, the act 902 of prompting the user to perform specific gestures may be replaced with an act where the user provides an indication of the gesture about to be performed (and/or currently being performed). An example of such a method of generating new gesture models is shown in FIG. 9B by the method 900B. As shown, the method 900B may be a modified version of method 900A where the act 902 has been replaced with act 908 of receiving an indication that the user is performing particular gesture(s). The system may receive an indication that the user is performing a particular gesture in any of a variety of ways. For example, the system may present a list of potential gestures and receive an indication of which gesture in the list of potential gestures is being performed. The information regarding the particular gesture being performed may be employed in a similar fashion as described above with respect to FIG. 9A to segment the neuromuscular data and train gesture models to recognize each of the gestures performed.

The techniques described herein to recognize gestures (e.g., discrete gestures and/or continuous gestures) based on neuromuscular signals may be employed in any of a variety of ways to control other devices. In some embodiments, the techniques described herein may enable a new newsfeed paradigm that allows for easier access and control of news feeds. Conventionally, a user may scroll through and/or interact with a stream of content units (e.g. social media) in a news feed by interacting with a keyboard (e.g., pressing character keys), a mouse (e.g., clicking buttons or moving the mouse), or by a touch screen (e.g., swiping or tapping on the screen). Thereby, a user is likely physically connected to the device that has the newsfeed (e.g., a phone, a laptop, etc.) and may have to switch back and forth between input devices (e.g., switch between a mouse and a keyboard) to interact with the news feed. Using the techniques described herein, a newsfeed may be controlled through EMG controls and/or through handstate (positional and/or force hand controls). For example, such a system may employ any one or more of the following approaches: (1) use a pre-trained/pre-set vocabulary of gestures to control continuous/discrete scrolling and discrete interactions with content (clicking, liking, sharing, etc.); (2) train gesture model(s) to recognize gestures for scrolling, clicking while using the keyboard for typing; (3) train gesture model(s) to recognize gestures for scrolling, clicking, typing, likes, and/or emojis; (4) training gesture models to recognize gestures for Emoji insertion (e.g. drawing a smiley face, thumbs up, thumbs down); and (5) provide content-specific interaction suggestions for each content type (e.g., after a brief pause) based on an estimate of intention-to-interact to, for example, streamline the experience of interacting with a newsfeed in augmented reality and/or virtual reality interfaces.

In some embodiments, the techniques described herein may be employed to enable a new paradigm to control music playback. Conventionally, a user generally must have physical access to a device to control music playback (e.g., access to a mouse, a keyboard, a cell phone, etc.). Thereby, a user generally can't change the music being played while simultaneously doing another task, such as browsing the web or typing in a word document. Using the techniques described herein, a user may be capable of controlling music playback using neuromuscular signals. Thereby, the user may control music playback while seamlessly controlling another device (or another aspect of the music playback device). For example, such a system may employ any one or more of the following approaches: (1) using a pretrained/predefined vocabulary to interact with music specific controls; (2) train gesture model(s) to recognize gestures that trigger the music playback functions pause track, play track, mute, play next track, play previous track, and/or skip current track; and (3) train a gesture model to recognize a continuous gesture that controls continuous variables associated with music playback settings such as changing volume and changing an equalizer.

It should be appreciated that the techniques described herein to recognize neuromuscular signals may be employed in still yet other applications. For example, the techniques described herein may be employed to: (1) control interaction with photo and/or video editing tools, such as selecting a filter, controlling a slider, resizing content, painting, drawing or creating in 2D or 3D, including selecting a tool from a set of tools in a toolbox and subsequently applying that tool, rewinding a video, fast forwarding a video; and (2) control interaction with content streams (e.g., TWITTER feeds, FACEBOOK feeds, etc.) such as giving a thumbs up or a thumbs down to a piece of content, accepting or rejecting a piece of content (accepting or rejecting a TINDER match) and/or entering emojis.

The above-described embodiments can be implemented in any of numerous ways. For example, the embodiments may be implemented using hardware, software or a combination thereof. When implemented in software, the software code can be executed on any suitable processor or collection of processors, whether provided in a single computer or distributed among multiple computers. It should be appreciated that any component or collection of components that perform the functions described above can be generically considered as one or more controllers that control the above-discussed functions. The one or more controllers can be implemented in numerous ways, such as with dedicated hardware or with one or more processors programmed using microcode or software to perform the functions recited above.

In this respect, it should be appreciated that one implementation in accordance with some embodiments of the technology described herein comprises at least one non-transitory computer-readable storage medium (e.g., a computer memory, a portable memory, a compact disk, etc.) encoded with a computer program (i.e., a plurality of instructions), which, when executed on a processor, performs the above-discussed functions of the some embodiments of the technology described herein. The computer-readable storage medium can be transportable such that the program stored thereon can be loaded onto any computer resource to implement the aspects of some embodiments of the technology described herein. In addition, it should be appreciated that the reference to a computer program which, when executed, performs the above-discussed functions, is not limited to an application program running on a host computer. Rather, the term computer program is used herein in a generic sense to reference any type of computer code (e.g., software or microcode) that can be employed to program a processor to implement the above-discussed aspects of some embodiments of the technology described herein.

Various aspects of some embodiments of the technology described herein may be used alone, in combination, or in a variety of arrangements not specifically discussed in the embodiments described in the foregoing and are therefore not limited in their application to the details and arrangement of components set forth in the foregoing description or illustrated in the drawings. For example, aspects described in one embodiment may be combined in any manner with aspects described in other embodiments.

Also, embodiments of the technology described herein may be implemented as one or more methods, of which an example has been provided. The acts performed as part of the method(s) may be ordered in any suitable way. Accordingly, embodiments may be constructed in which acts are performed in an order different than illustrated, which may include performing some acts simultaneously, even though shown as sequential acts in illustrative embodiments.

All definitions, as defined and used herein, should be understood to control over dictionary definitions, and/or ordinary meanings of the defined terms.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

Use of ordinal terms such as "first," "second," "third," etc., in the claims to modify a claim element does not by itself connote any priority, precedence, or order of one claim element over another or the temporal order in which acts of a method are performed. Such terms are used merely as labels to distinguish one claim element having a certain name from another element having a same name (but for use of the ordinal term).

The phraseology and terminology used herein is for the purpose of description and should not be regarded as limiting. The use of "including," "comprising," "having," "containing", "involving", and variations thereof, is meant to encompass the items listed thereafter and additional items.

Having described several embodiments in detail, various modifications and improvements will readily occur to those skilled in the art. Such modifications and improvements are intended to be within the spirit and scope of the invention. Accordingly, the foregoing description is by way of example only, and is not intended as limiting. The invention is limited only as defined by the following claims and the equivalents thereto.

## Claims

1. A computerized system, comprising:
a plurality of neuromuscular sensors configured to continuously record a plurality of neuromuscular signals from a user, wherein the plurality of neuromuscular sensors are arranged on one or more wearable devices; and
at least one computer processor programmed to:
determine, using one or more trained statistical models and the plurality of neuromuscular signals, position information and force information representing at least one movement performed by the user;
identify a discrete gesture event performed by the user based, at least in part, on the position information and/or the force information; and
wherein the at least one computer processor is further programmed to generate a musculoskeletal representation of a hand of the user based, at least in part, on the position information and/or force information, and
wherein the determined position information comprises a set of joint angles, wherein each of the joint angles in the set describes a spatial relationship between two or more connected segments of the musculoskeletal representation of the hand of the user.

2. The computerized system of claim 1, wherein the system further comprises:
at least one storage device configured to store gesture models for each of a plurality of discrete gesture events, wherein identifying a discrete gesture event performed by the user comprises identifying the discrete gesture event based, at least in part, on one or more of the stored gesture models.

3. The computerized system of claim 2, wherein a first gesture model of the stored gesture models comprises one or more values for a subset of joint angles for particular connected segments of the musculoskeletal model, and
wherein identifying the discrete gesture event comprises determining that the user has performed the discrete gesture event for the first gesture model based on a comparison of at least some of the position information and the one or more values specified in the first gesture model, preferably wherein the one or more values comprise a range of values for each of the joint angles in the subset, and
wherein determining that the user has performed the discrete gesture event for the first gesture model comprises determining that the position information includes values for joint angles of the particular connected segments that fall within the range of values specified in the first gesture model..

4. The computerized system of claim 2, wherein the determined force information describes a force exerted by at least one segment of the musculoskeletal representation of the hand, wherein a first gesture model of the stored gesture model specifies one or more values for a force exerted by a subset of one or more segments of the musculoskeletal model, and wherein identifying the discrete gesture event comprises determining that the user has performed the discrete gesture event for the first gesture model based on a comparison of at least some of the force information and the one or more values specified in the first gesture model,
preferably wherein the one or more values comprise a range of forces for each of the at least one segment in the subset, and
wherein determining that the user has performed the discrete gesture event for the first gesture model comprises determining that the force information includes a value for the force exerted by the at least one segment in the subset that falls within the range of values specified in the first gesture model,
preferably, wherein the one or more values comprise a first threshold value for a first segment in the subset, and
wherein determining that the user has performed the discrete gesture event for the first gesture model comprises determining that the force information includes a value for the first segment that exceeds the first threshold value.

5. The computerized system of claim 4, wherein the one or more values comprise a second threshold value for the first segment in the subset, and wherein the at least one computer processor is further programmed to determine that the user has completed performance of the discrete gesture when the force information includes a value for the first segment that is lower than the second threshold value.

6. The computerized system of claim 3, wherein the determined force information describes a force exerted by at least one segment of the musculoskeletal representation of the hand, wherein the first gesture model of the stored gesture models specifies one or more values for a force exerted by a subset of one or more segments of the musculoskeletal model, and wherein identifying the discrete gesture event further comprises determining that the user has performed the discrete gesture event for the first gesture model based on a comparison of at least some of the force information and the one or more values for a force specified in the first gesture model.

7. The computerized system of claim 2, wherein the at least one computer processor is further programmed to:
determine that the user is performing a new discrete gesture that does not have a corresponding stored gesture model; and
add to the stored gesture models, a new gesture model based, at least in part, on the determined position information and/or the determined force information.

8. The computerized system of claim 1, wherein the identified discrete gesture event is a first gesture event, and wherein the at least one computer processor is further programmed to identify, using the one or more trained statistical models, a second gesture event performed by the user, preferably wherein the second gesture event is a continuous gesture event performed simultaneously with the first gesture event.

9. The computerized system of claim 8, wherein the second gesture event is performed by the user subsequent to the user performing the first gesture event.

10. The computerized system of claim 9, wherein the second gesture event is a continuous gesture event.

11. The computerized system of claim 9, wherein the second gesture event is a second discrete gesture event.

12. The computerized system of claim 8, wherein the first gesture event is identified based on the position information and the second gesture event is determined based on the force information.

13. The computerized system of claim 8, wherein the first gesture event is identified based on the force information and the second gesture event is determined based on the position information.

14. The computerized system of claim 8, further comprising at least one auxiliary sensor configured to continuously record a plurality of auxiliary signals, wherein identifying the second gesture event comprises identifying the second gesture event based, at least in part, on the plurality of auxiliary signals.

15. The computerized system of claim 14, wherein the at least one auxiliary sensor comprises at least one inertial measurement unit.
